# EUROPÄISCHE PATENTSCHRIFT

(11) **EP 0 625 921 B1**
(45) Veröffentlichungstag und Bekanntmachung des Hinweises auf die Patenterteilung: **27.03.1996**
(21) Anmeldenummer: 93903908.7
(22) Anmeldetag: 04.02.1993
(51) Int. Cl.: B01D 1/18, F26B 21/04, B01J 2/16

(54) **VERFAHREN ZUR HERSTELLUNG VON GRANULATEN, DIE ALS NETZ-, WASCH- UND/ODER REINIGUNGSMITTEL GEEIGNET SIND**
PROCESS FOR PRODUCING GRANULATES USEFUL AS WETTING, WASHING AND/OR CLEANING AGENTS
PROCEDE DE FABRICATION DE GRANULATS CONVENANT COMME AGENTS MOUILLANTS, DETERGENTS ET/OU NETTOYANTS

(30) Priorität: 12.02.1992 DE 4204090; 12.02.1992 DE 4204035; 27.02.1992 DE 4206050; 02.03.1992 DE 4206521
(43) Veröffentlichungstag der Anmeldung: 30.11.1994
(73) Patentinhaber: Henkel Kommanditgesellschaft auf Aktien, D-40191 Düsseldorf (DE)
(72) Erfinder: RÄHSE, Wilfried, D-4000 Düsseldorf 13 (DE); FUES, Johann, D-4048 Grevenbroich 5 (DE); BECK, Wilhelm, D-4000 Düsseldorf 13 (DE); KOCH, Otto, D-5653 Leichlingen (DE)
(86) Internationale Anmeldenummer: EP9300266
(87) Internationale Veröffentlichungsnummer: WO9315813

(56) Entgegenhaltungen:
- WO-A-88/05373
- PATENT ABSTRACTS OF JAPAN vol. 10, no. 144 (C-349)27. Mai 1986 & JP,A,61 004 795 (EBARA INFILCO KK) 10 January 1986

## Beschreibung

Die Erfindung betrifft ein Verfahren zur Herstellung von schütt- und rieselfähigen Granulaten von Wertstoffen oder Wertstoffgemischen, die als Netz-, Wasch- und/oder Reinigungsmittel und/oder zur Verwendung in solchen Mitteln geeignet sind, aus ihren wäßrigen Lösungen und/oder Suspensionen durch Wirbelschicht-Sprühgranulation in einem heißen Fluidisierungsgas im Bereich des Normaldrucks.

Zur Erzeugung von Partikeln aus anfänglich flüssigem Produkt, also aus Lösungen oder Suspensionen, kommen in der technischen Anwendung insbesondere die Sprühtrocknung, die Sprühtrocknung mit integrierter Wirbelschicht-Agglomeration und die Wirbelschicht-Sprühgranulation in Frage. Üblicherweise wird bei der Herstellung von Granulaten aus wäßrigen Zubereitungen von Wertstoffen der eingangs genannten Art seit Jahrzehnten weltweit in großtechnischen Maßstab die Sprühtrocknung eingesetzt. Als Trocknungsgasstrom werden Heißluft oder Gemische von Luft und heißen Verbrennungsabgasen verwendet. Textilwaschpulver sowie Wertstoffe und Wertstoffgemische zur Herstellung von Textilwaschmitteln in schütt- und rieselfähiger Pulverform werden in sogenannten Sprühtürmen in der Regel im Bereich des Umgebungsdrucks in Gegenstrom-, seltener in Gleichstromfahrweise, großtechnisch gewonnen.

Auch der Einsatz der Wirbelschicht-Sprühgranulation zur Herstellung von Waschmittelgranulaten ist aus dem Stand der Technik bekannt (Uhlemann in Chem.-Ing.-Tech. 62 (1990) Nr. 10, S. 822 - 834 und EP-B-163 836). In diesem Verfahren, das zur Herstellung pulverförmiger Netz-, Wasch- und Reinigungsmittel allerdings viel seltener durchgeführt wird, werden Feststoffpartikel in einem aufwärtsgerichteten Gasstrom in der Schwebe gehalten. In diesem Zustand sind die Partikel voneinander getrennt und so beim Einsprühen von Flüssigkeit in das Wirbelbett für die Sprühtropfen rundum zugänglich. Außerdem findet in diesem Zustand ein intensiver Wärme- und Stoffaustausch zwischen den Feststoffpartikeln und dem Gasstrom statt.

Wenn nun ein schwebendes Partikel von einem Sprühtropfen getroffen wird, verteilt sich das flüssige Produkt des Sprühtropfens auf dem festen Untergrund durch Spreitung. Der intensive Wärme- und Stoffaustausch mit dem umgebenden Gasstrom führt zu einer Trocknung und Verfestigung des Flüssigkeitsfilms. Durch vielfaches Aufsprühen, Spreiten und Verfestigen wächst das Partikel zwiebelartig. Das Teilchen mit der Wunschkorngröße ist kompakt und auch nahezu rund.

Bei der Wirbelschicht-Sprühgranulation wäßriger Zubereitungen der eingangs genannten Stoffe wird wie bei der Sprühtrocknung mit Heißluft als Fluidisierungsgas gearbeitet. Aus der EP-B-163 836 ist ferner der Einsatz von Stickstoffgas genannt.

Zu den Vorteilen des Trocknungsverfahrens unter Einsatz von Heißluft als Trockengas zählt unter anderem neben der beliebigen Verfügbarkeit der Gasphase die Möglichkeit, in offenen Systemen arbeiten zu können, die eine Entsorgung der mit Feuchtigkeit beladenen Heißgasphase durch Abgeben in die Außenluft technisch problemlos ermöglichen. Intensive physikalischchemische Untersuchungen über den Ablauf des Trocknungsverfahrens haben darüber hinaus gezeigt, daß die Trocknung mit Heißluft auch schon bei Einsatz vergleichsweise milder Heißgastemperaturen wirkungsvoll und rasch abläuft. Der Trocknungsvorgang am feuchten Partikel setzt weitgehend unabhängig von der Temperatur des verwendeten Heißgases schon bei vergleichsweise niedrigen Temperaturen - beispielsweise bei Temperaturen der Partikel von etwa 40°C - ein und setzt sich unter vergleichsweise langsamer Steigerung der Partikeltemperatur bis zum Siedebereich des Wassers unter Normaldruck fort. Insgesamt verläuft der Trocknungsvorgang in Heißluft rasch und gerade auch in den letzten Trocknungsstufen sehr effektiv, so daß die Wertstoffe beim Trocknen zum rieselfähigen Gut einer vergleichsweise milden Temperaturbelastung ausgesetzt sind.

Von den Nachteilen und Einschränkungen dieses Verfahrenstyps gerade für das durch die Erfindung angesprochene Sachgebiet der Trocknung von Wertstoffen bzw. Wertstoffgemischen aus den Bereichen der Textilwaschmittel und/oder Reinigungsmittel sei beispielhaft auf die folgenden Punkte verwiesen: Zahlreiche dieser Wertstoffe sind - insbesondere im Fall organischer Komponenten - oxidationsempfindlich. Die Behandlung mit Heißluft kann besonders im höheren Temperaturbereich zu Schädigungen führen. Die Auftrocknung rein oder weitgehend organischer Wertstoffe, z. B. von Tensiden auf Naturstoffbasis, schafft beträchtliche Probleme aus der Brand- oder gar Explosions-Gefahr des Trockengutes. Wichtige Wertstoffkomponenten, insbesondere Niotenside des Waschmittelbereichs, zeigen eine mehr oder weniger starke Pluming-Neigung, d. h. zum Übergang organischer Aerosole in die dampfbeladene Abluft der Sprühtürme. Insgesamt besteht die erhöhte Gefahr der Umweltbelastung durch die großen Mengen der verarbeiteten wäßrigen, festen und gasförmigen Materialanteile und Hilfsstoffe. Überlegungen zur Kreislaufführung des Trocknungsgasstromes haben in der gewerblichen Anwendung dieses Verfahrens keinen durchgreifenden Niederschlag gefunden.

Bei der Wirbelschichttrocknung ist es ferner bekannt, an Stelle von Heißluft als Trocknungsgas Heißdampf einzusetzen (Gehrmann, Chem.-Ing.-Tech. 62 (1990) Nr. 10, S. A 512 - A 520). Hier werden besonders geringe Emissionen (Abwasser, Abluft) erreicht, in dem die ausgetriebenen Brüden kondensiert werden. Nach dem Stand der Technik ist dieses Verfahren jedoch nur für relativ temperaturunempfindliche Produkte, wie z. B. Braunkohle oder Klärschlamm einsetzbar. Als Anwendungsgebiet wird ferner die Trocknung von Papierpulpe genannt. Im gleichen Dokument wird zur Reduktion von Emissionen bei der Trocknung temperaturempfindlicher Produkte der Einsatz von Vakuumtrocknern empfohlen, gleichzeitig aber auch auf die Schwierigkeiten beim kontinuierlichen Betreiben dieser Apparate mit rieselfähigen Schüttgütern hingewiesen.

Auch beim Trocknen von temperaturempfindlichen Produkten im Dampfwirbelschichtrockner treten Probleme auf. Die Trocknungsgeschwindigkeit im Temperaturbereich um 150°C ist für überhitzten Wasserdampf nämlich deutlich niedriger als für Heißluft. Erst die Steigerung der Arbeitstemperatur auf 250°C bringt eine Annäherung der Trocknungsgeschwindigkeiten. Eine Trocknung der Wertstoffe der eingangs genannten Art auf übliche Restfeuchtegehalte bei einer akzeptablen Trocknungsdauer läßt sich beim Einsatz von überhitztem Wasserdampf als Trocknungsgas daher nur mit derart hohen Arbeitstemperaturen erreichen, bei denen eine nicht mehr akzeptable Temperaturschädigung des Einsatzgutes auftritt.

Der Erfindung liegt daher die Aufgabe zugrunde, das Verfahren der eingangs genannten Art zu verbessern, so daß es abgasfrei und frei von beladenem Abwasser durchgeführt werden kann, ohne daß bei der großtechnischen Anwendung des Verfahrens eine Qualitätsverschlechterung des erhaltenen Granulats eintritt.

Diese Aufgabe wird erfindungsgemäß dadurch gelöst, daß man mit überhitztem Wasserdampf als Fluidisierungsgas arbeitet, dabei das Granulat vor dessen Gefährdung durch thermische Einwirkung aus dem Granulator austrägt und die lagerbeständige Schütt- und Rieselfähigkeit des derart partiell aufgetrockneten Gutes gegebenenfalls durch Zusatz zur Bindung begrenzter Wassermengen befähigter Mischungsbestandteile und/oder eine Nachbehandlung sicherstellt und daß man im geschlossenen System mit einem Wasserdampfkreislaufstrom arbeitet, dem man den verdampften Wasseranteil des Einsatzgutes als Teilstrom entzieht und die abgegebene Wärmeenergie wieder zuführt. Die Energiezufuhr kann außerhalb des Trocknungsbehälters durch Überhitzung des Wasserdampfs und/oder innerhalb über integrierte Wärmetauscher erfolgen.

In der älteren Anmeldung DE-A 40 30 688 (Offenlegungstag : 2.4.92) ist ein Verfahren zur Gewinnung solcher feinteiliger fester schütt- bzw. rieselfähiger Wertstoffe oder Wertstoffgemische für Netz-, Wasch- und/oder Reinigungsmittel aus ihren wäßrigen Zubereitungen beschrieben, wobei überhitzter Wasserdampf als trocknender Heißgasstrom eingesetzt und dabei die Trocknung des partikulären Gutes vor dessen Gefährdung durch thermische Einwirkung abgebrochen wird. Erforderlichenfalls wird dabei die lagerbeständige Schütt- bzw. Rieselfähigkeit des derart partiell aufgetrockneten Gutes durch Zusatz solcher Mischungsbestandteile sichergestellt, die zur Bindung begrenzter Wassermengen befähigt sind. Neben oder anstelle dieser Maßnahme kann auch eine Nachbehandlung zur Homogenisierung des Restfeuchtegehaltes im partikulären Gut und/oder dessen Nachtrocknung unter wertstoffschonenden Bedingungen angeschlossen werden.

Zur Erzeugung von Granulaten wird jedoch in der älteren Anmeldung die Sprühtrocknung eingesetzt. Eine Trocknung in einer Wirbelschicht ist nur bei der Nachbehandlung des getrockneten Gutes optional vorgesehen.

Die nachfolgend geschilderte Erfindung betrifft eine gezielte Ausgestaltung dieses Verfahrens aus der genannten älteren Anmeldung.

Zu berücksichtigen ist in diesem Zusammenhang, daß bis heute die praktischen Erfahrungen beim Einsatz von Trocknungsverfahren unter Verwendung von überhitztem Wasserdampf als Trocknungsgas sehr beschränkt sind, obwohl diese Technologie an sich seit dem Anfang dieses Jahrhunderts bekannt ist und in der Literatur wiederholt beschrieben wird. Die ältere Patentanmeldung DE-A 40 30 688 setzt sich mit dem einschlägigen druckschriftlichen Stand der Technik ausführlich auseinander. Auf diese Angaben der älteren Anmeldung sei hier verwiesen und lediglich die nachfolgenden Veröffentlichungen benannt, die ihrerseits umfangreiche Literaturverzeichnisse zu diesem Arbeitsgebiet enthalten: A. M. Trommelen et al. "Evaporation and Drying of Drops in Superheated Vapors" AIChE Journal 16 (1970) 857 - 867; Colin Beeby et al. "STEAM DRYING" Plenary Lecture, Proc. 4th Int. Drying Sym. Kyoto (eds. R. Toei and Arun S. Mujumdar) 1984, Bd. 1, 51-68 sowie W. A. Stein "Berechnung der Verdampfung von Flüssigkeit aus feuchten Produkten im Sprühturm" Verfahrenstechnik 7 (1973) 262 - 267.

Ein für das Verständnis der Erfindung wesentlicher grundsätzlicher Unterschied der Trocknung mit Heißluft zur Trocknung mit überhitztem Wasserdampf ist auffallend: Beim Arbeiten mit dem Heißluftstrom setzt der Trocknungsvorgang bereits bei niederen Guttemperaturen wirkungsvoll ein. Die Wasserabreicherung ist dabei derart ausgeprägt, daß beim Erreichen der Guttemperatur von etwa 100°C die Trocknung schon nahezu abgeschlossen ist.

So sind beispielsweise bis zu ca. 90 % des insgesamt vorhandenen Wassers zu diesem Zeitpunkt aus dem Tropfen bereits ausgetragen. Völlig anders sieht der Verlauf der Tropfentemperatur beim Einsatz von Heißdampf aus. Durch Kondensation des Heißdampfes auf dem kühleren Einsatzgut und Abgabe der Kondensationswärme an das zu trocknende Gut findet eine spontane Aufheizung des wäßrigen Tropfens auf die Siedetemperatur des Wassers unter Arbeitsbedingungen statt, beim Arbeiten unter Normaldruck also auf Temperaturen von etwa 100°C. Diese Siedetemperatur wird als Mindesttemperatur während des gesamten Trocknungszeitraums im Guttropfen beibehalten. Die jeweilige Beladung der wäßrigen Phase mit den zu gewinnenden Trockenstoffen führt - in Abhängigkeit vom Trocknungsgrad des Tropfens - zu individuellen Abweichungen des Temperaturverlaufs nach oben zu einem früheren oder späteren Zeipunkt.

Im erfindungsgemäßen Verfahren wird unter bewußter Inkaufnahme gewisser Einschränkungen bezüglich des Trocknungsergebnisses im Endprodukt von den vielgestaltigen Vorteilen des Austausches der Heißluft durch überhitzten Wasserdampf im Wirbelschicht-Sprühgranulationsverfahren gerade bei dem erfindungsgemäß betroffenen temperaturempfindlichen Trocknungsgut Gebrauch gemacht. Als ein wesentliches Element sieht die Erfindung hier vor, im Trockengut Restfeuchten zu tolerieren, die - in Abhängigkeit vom Einzelfall - durchaus beträchtlich sein können, gleichzeitig aber entweder durch gegebenenfalls mitzuverwendende Hilfsmittel die lagerbeständige Schütt- und Rieselfähigkeit des derart aufgetrockneten kornförmigen Gutes sicherzustellen und/oder eine Nachbehandlung z. B. eine Nachtrocknung vorzusehen. Die Hilfsstoffe können dabei, wie im nachfolgenden noch geschildert wird, ihrerseits ausgewählte Wertstoffe für den geplanten Einsatzzweck oder Inertstoffe sein. Erfindungsgemäß gelingt damit die Einhaltung der Qualitätsnormen der bekanntlich komplexen Anforderungen an die durch die Erfindung betroffenen Mehrstoffgemische auf Basis organischer und anorganischer Mischungskomponenten - beispielsweise Textilwaschmittel - ohne Qualitätseinbuße, jedoch unter Wahrnehmung der Vorteile der Trocknung mit überhitztem Wasserdampf. Oxidationsprozesse an gefährdeten Komponenten der Netz-, Wasch- und Reinigungsmittel sind unterbunden; Brand- und Explosionsgefahren sind ausgeschaltet. Da der Trocknungsdampf im Kreislauf gefahren wird, entfällt die Abgabe unerwünschter Komponenten in die Umgebungsluft. Lediglich der aus dem zu trocknenden Gut entstandene Dampfteilstrom wird ausgeschleust und bedarf der Reinigung. Dabei anfallende mitgetragene Gutanteile werden verwertet. Auch sonstige technologische Vorteile für die Auslegung der entsprechenden Einrichtungen können genutzt werden.

Der außerhalb des Wirbelbetts am Dampfkreislauf vorgenommene Energieeintrag kann in jeder bekannten beliebigen Form vorgenommen werden. Bevorzugt ist aber die indirekte Wärmeübertragung. Als Beispiel sei die Verwendung von Rohrbündelsystemen erwähnt, die einerseits von Heizgasen beliebigen Ursprungs und andererseits - aber getrennt von diesen Heizgasen - von dem aufzuheizenden Wasserdampfstrom durchströmt werden.

In einer besonders wichtigen Ausführungsform der Erfindung wird dieser indirekte Energieeintrag in den Dampfkreislaufstrom mittels eines oder mehrerer integrierter Brenner mit indirekter Wärmeübertragung auf den Dampfstrom vorgenommen, wobei brennerseitig die heißen Verbrennungsgase unmittelbar in den Wärmeaustauscher eingeleitet werden, der in den Dampfkreislaufstrom integriert ist. Die Temperatur der Verbrennungsgase kann dabei beispielsweise im Bereich von etwa 400 bis 1 000°C und insbesondere im Temperaturbereich von etwa 650 bis 960°C liegen. Zur optimalen Wärmeausnutzung und damit zur Kostensenkung des Gesamtverfahrens kann es zweckmäßig sein, eine anteilige, bevorzugt möglichst weitgehende Kreislaufführung auch der Rauchgase vorzusehen. So können beispielsweise wenigstens 30 Vol.-% und vorzugsweise mehr als 40 Vol.-% der heißen Rauchgase nach dem Verlassen des integrierten Wärmeaustauschers im Kreislauf zur weiteren Energieverwertung wieder zurückgeführt werden. Vorzugsweise liegt die Menge der Rauchgaskreislaufführung bei mehr als 60 Vol.-% und dabei häufig im Bereich von etwa 70 Vol.-% der zugeführten Verbrennungsgase. Zum Betrieb des Brenners sind alle üblichen Brenngase, insbesondere Erdgas oder vergleichbare niedere Kohlenwasserstoffe bzw. Kohlenwasserstoffgemische und/oder Wasserstoff geeignet.

Im erfindungsgemäßen Verfahren führt man dem Heißdampf hauptsächlich Wärmeenergie über innen- oder außenliegende Wärmeaustauscher zu, wobei der Heißdampf als Übertragungsmedium dient. Durch den zuverlässigen und totalen Ausschluß von Schadstoffen, insbesondere Sauerstoff und Kohlendioxid, im Trocknungsgas sind unerwünschte oxydative Angriffe am zu trocknenden Gut ebenso ausgeschlossen wie die Bildung von Carbonatsalzen bzw. Carbonatablagerungen, die in den meist basischen Wertstoffen des hier betroffenen Arbeitsbereiches beim Arbeiten mit Rauchgas enthaltenden Trocknungsgasen unvermeidlich sind. Der Einsatz von im Wirbelbett integrierten Wärmeaustauschern zur zusätzlichen Beheizung ermöglicht eine besonders effektive Wärmeübertragung und erlaubt eine erhebliche geringere Dampftemperatur als die alleinige Beheizung durch Einleiten von Heißdampf, um die gleiche Restfeuchte zu erhalten, so daß die thermische Beanspruchung des zu trocknenden Guts gering ist. Diese Verfahrensvariante eignet sich besonders für Trocknungsgut mit mittlerer Temperaturempfindlichkeit. Bei der Trocknung thermisch sensitivere Wertstoffe und Wertstoffgemische sind vorteilhafter ausschließlich externe Wärmeaustauscher einzusetzen, wobei man kürzere Verweilzeiten als bei im Wirbelbett integrierten Wärmeaustauschern einstellt.

Erfindungsgemäß wird im geschlossenen System mit einem Wasserdampfkreislaufstrom gearbeitet, dem der verdampfte Wasseranteil des Einsatzgutes entzogen wird, während der insbesondere im Trocknungsschritt abgegebene Energiebetrag dem Kreislaufstrom wieder zugeführt wird. Der abgezogene Wasserdampfteilstrom wird nach der Reinigung von mitgetragenen Anteilen des Einsatzgutes in einer wichtigen Ausführungsform als Brauchdampf anderweitig verwendet, nachdem gewünschtenfalls zunächst Druck und Temperatur dieses Dampfteilstromes den dort geforderten Bedingungen angeglichen worden sind. In einer anderen Ausführungsform des erfindungsgemäßen Verfahrens ist es zweckmäßig, mindestens einen Anteil dieses abgezogenen Dampfteilstromes zu kondensieren. Die dabei anfallende wäßrige Flüssigphase wird vorzugsweise nach Aufkonzentrierung zusammen mit den darin vorliegenden ausgekreisten Wertstoffanteilen zur Zubereitung der zu trocknenden wäßrigen Lösungen und/oder Suspensionen eingesetzt.

Es wird ferner mit Innendrucken des dampferfüllten Systems im Bereich des Normaldrucks gearbeitet. Dabei werden aber insbesondere derart angehobene Drucke im Kreislaufsystem eingestellt, daß, beispielsweise an Schadstellen, wie sie in großtechnischen Anlagen niemals völlig auszuschließen sind, Lufteinbrüche in das dampferfüllte Kreislaufsystem mit Sicherheit verhindert werden können.

Das Arbeiten im Bereich des Normaldrucks ermöglicht den vergleichsweise komplikationslosen Betrieb auch in großtechnischen Anlagen mit den geforderten hohen Stoffdurchsätzen pro Zeiteinheit. Da Fremdgas, insbesondere Luft, in das mit Wasserdampf erfüllte Kreislaufsystem nicht einbrechen kann, sind Sekundärschädigungen der angestrebten hochwertigen Produktbeschaffenheit damit zuverlässig ausgeschlossen. Geeignete Arbeitsdrucke liegen beispielsweise im Bereich bis etwa 150 mbar, zweckmäßig bis etwa 75 mbar und vorzugsweise unterhalb 50 mbar Überdruck. Der Bereich von etwa 5 bis 15 mbar Überdruck kann besonders bevorzugt sein. Die Trocknung mit überhitztem Wasserdampf im Sinne der Erfindung ist prinzipiell natürlich auch bei Unterdrucken, insbesondere im Bereich mäßiger Unterdrucke, möglich, erfordert dann aber einen erhöhten technischen Aufwand zur Sicherstellung des Ausschlusses möglicher Schadstellen im Kreislaufsystem, durch die unerwünschte Lufteinbrüche ausgelöst würden. Die zu den bevorzugten Bereichen des Überdrucks angegebenen Zahlenwerte sind hier sinngemäß anzuwenden.

Wesentlich in der erfindungsgemäßen Lehre ist der Verzicht auf die Einstellung optimaler Trocknungsergebnisse durch Heißdampfeinwirkung im Verfahrensendprodukt. Restfeuchten, auch durchaus beträchtlichen Ausmaßes, können toleriert werden, wenn in der Zusammensetzung des Gutes sichergestellt ist, daß durch eine Art "Innerer Trocknung" eine so weitgehende Bindung dieses Restwassers stattfindet, daß die lagerbeständige Schütt- und Rieselfähigkeit des Trockengutes gewährleistet ist.

Verlangt die Temperaturempfindlichkeit des zu trocknenden Wertstoffs oder Wertstoffgemisches die Beibehaltung nicht unbeträchtlicher Wassermengen im Produkt der Haupttrocknung und damit gegebenenfalls die Bindung dieses Restwassers zur Sicherung der lagerbeständigen Schütt- und Rieselfähigkeit des Trockengutes, so werden erfindungsgemäß Hilfsstoffe eingesetzt, die bevorzugt als partikulärer Festkörper zur Wasserfixierung befähigt sind. Eine solche Fixierung von Restwasser kann beispielsweise über dessen Einbindung als Kristallwasser erfolgen. Ebenso ist aber auch eine rein absorptive Bindung begrenzter Wassermengen in Feststoffteilchen der hier betroffenen Art möglich, ohne daß dadurch eine unerwünschte Klebrigkeit bzw. Haftung der Teilchen aneinander bewirkt wird. Die Hilfsstoffe werden dabei in wenigstens so hinreichender Menge eingesetzt, daß trotz der im Gut verbliebenen Restfeuchte die Schütt- und Lagerbeständigkeit gewährleistet ist.

Die das Restwasser bindenden Hilfsstoffe können in einer Ausführungsform der Erfindung dem getrockneten Frischgut zweckmäßigerweise unmittelbar nach dessen Ausschleusung aus dem Granulator zugesetzt und damit intensiv vermischt werden. In einer bevorzugten Ausführungsform werden diese Hilfsstoffe allerdings, zumindest anteilsweise, den wäßrigen Lösungen bzw. Suspensionen schon vor der Wirbelschicht-Sprühgranulation zugemischt. Möglich ist diese zuletzt genannte Ausführungsform immer dann, wenn die jeweilige Temperaturempfindlichkeit des zu trocknenden Gutes eine so weitgehende Trocknung zuläßt, daß die verbleibende Restfeuchte in hinreichendem Ausmaß durch solche mitverwendeten Hilfsstoffe aufgenommen und gebunden werden kann.

In einer in diesem Zusammenhang bevorzugten Ausführungsform des erfindungsgemäßen Verfahrens werden als Restwasser bindende Hilfsstoffe entsprechende Wertstoffe aus dem Bereich der Netz-, Wasch- und/oder Reinigungsmittel eingesetzt, die ihrerseits hinreichend temperaturunempfindlich sind. Typische Beispiele hierfür sind kristallwasserbindende anorganische Wertstoffe aus den Klassen der Builder-Komponenten, der Waschalkalien und/oder der sogenannten Stellmittel, z. B. kristallwasserbindende Silikatverbindungen, insbesondere Zeolithe. Ein für Textilwaschmittel besonders charakteristisches Beispiel ist heute der Zeolith-NaA in Waschmittelqualität mit einem Calciumbindevermögen im Bereich von 100 bis 200 mg CaO/g - vergleiche hierzu die Angaben der DE 24 12 837. Beispiele für kristallwasserbindende Waschalkalien sind Soda oder Natriumbicarbonat, während Natriumsulfat als Neutralsalz bzw. Stellmittel beträchtliche Mengen an Kristallwasser binden kann. Neben oder anstelle solcher Hilfsstoffe mit der Fähigkeit zur Kristallwasserbindung binden kann aber das Restwasser auch durch Hilfsmittel bzw. entsprechende Wertstoffe mit der Fähigkeit zur absorptiven Wasserbindung eingesetzt werden. So ist es bekannt, daß bekannte Vergrauungsinhibitoren auf Stärke- bzw. Zellulosebasis, textilweichmachende Hilfsmittel, insbesondere auf Basis anorganischer, quellfähiger Silikate, aber auch eine Reihe von unter Normalbedingungen festen organischen Tensidverbindungen beträchtliche Wassermengen aufnehmen können, ohne mit einer unerwünschten Oberflächenklebrigkeit darauf zu reagieren.

Je nach der Temperaturempfindlichkeit der eingesetzten Wertstoffe bzw. Wertstoffgemische einerseits und der Natur und der Menge der mitverwendeten Hilfsstoffe andererseits können beträchtliche Restwassergehalte im aufgetrockneten Gut zurückbleiben, ohne dessen lagerbeständige Schütt- und Rieselfähigkeit zu gefährden. Erfindungsgemäß ist daher vorgesehen, die Trocknung mit überhitztem Wasserdampf bei Restwassergehalten des aus der Wirbelschicht entnommenen Gutes im Bereich von etwa 1 bis 20 Gew.-% abzubrechen, wobei Restwassergehalte im Bereich von etwa 5 bis 15 Gew.-% bevorzugt sind. Die hier angegebenen Bereiche beziehen sich dabei auf das Gewicht des aus der Wirbelschicht ausgetragenen Gutes. Erfindungsgemäß ist weiterhin bevorzugt, den Anteil dieses Restwassers, der nicht als Kristallwasser gebunden ist, auf höchstens etwa 10 Gew.-%, vorzugsweise auf nicht mehr als etwa 3 bis 4 Gew.-% einzugrenzen. Auch hier gilt zur Gew.-%-angabe das zuvor gesagte.

Die Arbeitsbedingungen des erfindungsgemäßen Verfahrens ermöglichen den Einsatz hoher Temperaturen der im Kreislauf geführten Wasserdampfphase im Bereich der Trocknung im Wirbelbett. Wird die Wärme ausschließlich über die Dampfphase eingebracht, so sind Arbeitstemperaturen im Bereich von etwa 270 bis 350°C in der Wasserdampfphase besonders geeignet. Diese Temperaturangaben beziehen sich jeweils auf die Temperatur des dem Wirbelbett zugeführten, auf Optimal-Temperatur aufgeheizten Wasserdampfstromes.

Beim Einsatz in das Wirbelbett integrierter Wärmeaustauscher wird die Wärme überwiegend durch diesen Wärmeaustauscher eingebracht. Die Wasserdampfphase dient zur Fluidisierung. In diesem Fall liegen die bevorzugten Eintrittstemperaturen des Wasserdampfes erheblich niedriger, nämlich bei 150°C bis 180°C. Die hier geringere Trocknungsgeschwindigkeit wird über die größere Bettlänge und/oder Betthöhe und damit durch die größere Verweilzeit in der Trocknungszone ausgeglichen. Je nach Temperaturempfindlichkeit des Trocknungsgut ist daher eine der beiden Ausführungsformen vorteilhafter.

Weitgehend energetische Überlegungen - insbesondere auch zu der beabsichtigten Weiterverwendung des auszukreisenden Dampfteilstromes - bestimmen die Mengenverhältnisse zwischen der zu verdampfenden flüssigen Wassermenge und der zugeführten Menge des überhitzten Wasserdampfes. Möglich sind hier Ausführungsformen, die nur eine beschränkte Absenkung der Dampftemperatur nach Verlassen des Wirbelbetts vorsehen, während in anderen Ausführungsformen eine weiterführende Ausnutzung der thermischen Energie des Wasserdampfes bis zu einer Absenkung der Dampftemperatur in die Nähe der Kondensationstemperatur zweckmäßig sein kann. Möglich ist es auch, in an sich bekannter Weise die Wirbelschicht in verschiedene Zonen einzuteilen: Hoch - und Mitteltemperaturzone sowie Kühlzone.

Eine besonders interessante Ausführungsform der Erfindung sieht die Rückgewinnung und Verwertung der Kondensationswärme des aus dem Kreislauf ausgeschleusten Wasserdampfanteiles vor. Durch den Einsatz geeigneter Arbeitsschritte kann dabei die Recyclisierung auch der geringen Wertstoffanteile sichergestellt werden, die über den ausgeschleusten Heißdampfstrom den primären Kreislauf des Dampfes verlassen haben. Hier kann beispielsweise unter Ausnutzung der Kondensationswärme des ausgeschleusten Dampfanteiles wie folgt gearbeitet werden:
In einer bevorzugt mehrstufigen Eindampfanlage wird unter Ausnutzung der Kondensationswärme des abgezogenen Dampfteilstromes das Dampfkondensat aufkonzentriert. Das dabei anfallende Restkonzentrat wird in den Verfahrensprimärkreislauf zurückgeführt. Insbesondere kann dieses Restkonzentrat dem durch überhitzten Heißdampf zu trocknenden Wertstoffslurry zugegeben werden.

Falls erforderlich, kann bei der Kondensation des aus dem Primärkreislauf ausgeschleusten Heißdampfes eine hier gegebenenfalls anfallende mit geringsten Wertstoffmengen beladene Restgasphase einem nachfolgenden Aufarbeitungsschritt - beispielsweise einer Verbrennung, der Behandlung in Biofiltern oder in Waschanlagen - zugeführt werden. Durch eine solche Kombination der Maßnahmen eines praktisch vollständigen Recyclisierens der jeweiligen Teilströme und der zuverlässigen Vernichtung von letzten Restspuren ermöglicht das erfindungsgemäße Verfahren auf dem hier betroffenen Arbeitsgebiet großtechnischer Fertigung erstmalig die Möglichkeit Wertstoffe und Wertstoffgemische aus dem Gebiet der Wasch- und Reinigungsmittel abluftfrei und frei von beladenem Abwasser zu gewinnen.

Neben oder an Stelle des Einsatzes von zur Bindung des Restwassers befähigten Hilfsstoffen sieht die Erfindung ferner eine Nachbehandlung des primär angefallenen, teilgetrockneten Granulats vor. Die Nachbehandlung wird durch zwei technische Konzeptionen realisiert, die auch miteinander verbunden werden können.

Die erste dieser Konzeptionen geht davon aus, daß der individuelle Auftrocknungsgrad des jeweils betroffenen Partikels von seiner Teilchengröße bestimmt wird. Wird erfindungsgemäß das Trocknungsverfahren zu einem Zeitpunkt abgebrochen, an dem noch beträchtliche Mengen an Restfeuchte im Gut vorliegen, dann wird eine integrale Betrachtung des Restfeuchtegehaltes der Wirklichkeit nur teilweise gerecht. In der differentiellen Betrachtung der Verteilung dieser Restfeuchte über die einzelnen Gutanteile zeigt sich, daß die Fein- beziehungsweise Feinstanteile sehr weitgehend oder vollständig aufgetrocknet sein können, während die gröberen Gutanteile noch so feucht sind, daß eine lagerbeständige Schütt- und Rieselfähigkeit für das dem Wirbelbett entnommene Gut noch nicht sichergestellt ist. In einer wichtigen Ausführungsform des erfindungsgemäßen Verfahrens wird dementsprechend eine "Nachtrocknung" des Primärgutes aus der Wirbelschicht durch einen zusätzlichen, mindestens einstufigen Nachbehandlungsschritt erreicht, der - ohne das pulverförmige Gut einer Gefährdung durch Verklebung auszusetzen - zu einer Homogenisierung des Feuchteghalts über das Gesamtgut unabhängig von der individuellen Teilchengröße führt. Auf diese Weise kann aus den noch vergleichsweise feuchten gröberen Anteilen des Gutes soviel an Restfeuchte in das Fein- und Feinstgut übertragen werden, daß nach diesem Homogenisierungsschritt die lagerbeständige Schütt- und Rieselfähigkeit des Trockengutes gewährleistet sind, ohne daß es des zusätzlichen Austrages weiterer Feuchtemengen aus dem Schüttgut bedarf.

Zur Verwirklichung dieser Nachbehandlungsstufe sind alle Verfahrenstechniken geeignet, die den Feuchtigkeitsgehalt der einzelnen Partikel unter gleichzeitiger Verhinderung eines Verklebens der Masse ausgleichen. Lediglich beispielhaft seien hier das Umwälzen, Mischen oder Schütteln des primär angefallenen Gutes im kontinuierlichen oder diskontinuierlichen Verfahren genannt. Besonders geeignet kann eine Nachbehandlung des Gutes in einem nachgeschalteten, weiteren Wirbelbett sein.

Hierbei wird mit beliebigen Gasen, vorzugsweise mit Umgebungsluft, gearbeitet. Oxidative Materialgefährdungen und unerwünschte Verunreinigungen der Abluft treten hierbei nicht oder kaum mehr auf und sind leicht zu beherrschen. Da das zu trocknende Gut dem Wirbelbett mit erhöhter Temperatur - üblicherweise im Bereich von etwa 105°C - entnommen wird, kann über eine solche nachgeschaltete Feuchtigkeitshomogenisierung in einer Wirbelschicht noch eine geringfügige zusätzliche Absenkung der Restfeuchte erzielt werden.

Neben oder anstelle einer solchen Hilfsmaßnahme kann im erfindungsgemäßen Verfahren aber auch eine zusätzliche Trocknung in einer oder mehreren Stufen zur weiteren Absenkung der Restfeuchte vorgesehen sein. Charakteristisch für die Nachtrocknung ist, daß hier unter Bedingungen gearbeitet wird, die die Wertstoffe des Trockenguts nicht schädigen. Als Beispiel von Verfahrensparametern zur Risikominderung seien genannt: Absenkung der Temperatur der Heißgasphase, Verzicht auf überhitzten Wasserdampf als Heißgas und dessen Ersatz durch Trocknungsgase anderen Ursprungs, beispielsweise Luft und/oder Inertgas sowie Übergang in eine andere Trocknungstechnologie.

Das Verfahren der Wirbelschicht-Sprühgranulation beruht auf dem Wachstum von Keimen, die entweder im Wirbelbett selbst durch nichttreffende, sich verfestigende Sprühtropfen gebildet werden, oder durch Abrieb von schon vorhandenen festen Teilchen erzeugt werden, oder die von außen dem Wirbelbett zugeführt werden. Um eine kontinuierliche Verfahrensführung zu gewährleisten, müssen gleichbleibende Granulationsbedingungen vorherrschen. Alle dem Wirbelbett entnommenen Granulate müssen zahlenmäßig durch neue Keime ersetzt werden. Andererseits muß das Abgas von mitgeführten Feingutanteilen gereinigt werden. Diese feinen Partikel sind aber auch Keimgut. Um auf eine besonders einfache und wirtschaftliche Weise den Ausgleich der oben genannten Partikelbilanz sicherzustellen, wird daher vorgeschlagen, daß man die mit dem Abgas aus dem Wirbelbett entweichenden Feingutanteile abscheidet und als Keime für die Granulatbildung insbesondere intern mit Hilfe eines über dem Wirbelbett angeordneten Staubfilters in das Wirbelbett zurückführt. Die Abscheidung des Feinguts aus dem Abgas kann mit Zyklonen vorgenommen werden. Vorteilhaft ist aber, daß man das Abgas mittels im Kopf des Granulators integrierte und oberhalb des Wirbelbetts angeordnete Tuchfilter reinigt. Damit wird eine Platzersparnis bei der ohnehin erforderlichen Abgasreinigung und Zurückführung der Feingutanteile in das Wirbelbett erreicht.

Damit nur diejenigen Granulate aus dem Wirbelbett entnommen werden, welche die gewünschte Korngröße erreicht haben, wird in einer weiteren Ausgestaltung vorgeschlagen, daß man das Granulat über einen oder mehrere Sichter aus dem Wirbelbett austrägt. Diese sind in platzsparender Weise vorteilhaft im Anströmboden der Wirbelbettapparatur eingesetzt. Besonders vorteilhaft sind dabei Gegenstrom-Schwerkraft-Sichter.

Für den Einsatz im erfindungsgemäßen Verfahren eignen sich insbesondere wäßrige Zubereitungen solcher Wertstoffe und Wertstoffkombinationen aus dem Gebiet der Netz-, Wasch- und/oder Reinigungsmittel, die durch kurzfristige Einwirkung von Wasser bzw. Wasserdampf im Bereich einer Guttemperatur von 100 bis 120°C nicht oder nicht wesentlich geschädigt werden. Geeignet sind insbesondere als Wertstoffbestandteile Komponenten dieser Art, die unter den Arbeitsbedingungen den angegebenen Temperaturbereich wenigstens für einen Zeitraum von etwa 5 s bis 5 min. schadlos überstehen. Entscheidend ist, daß der Zeitraum dieser Temperatureinwirkung im erfindungsgemäßen Verfahren so kurz gehalten wird, daß unter den gewählten Arbeitsbedingungen substantielle Schädigungen des zu trocknenden Gutes noch nicht auftreten. So können beispielsweise auch an sich hydrolysegefährdete Tensidverbindungen unter diesen Arbeitsbedingungen Verweilzeiträume von einigen Sekunden bis einigen Minuten weitgehend unbeschadet überstehen, wenn bestimmte, dem einschlägigen Fachmann bekannte Rahmenbedingungen eingehalten werden. So wird es möglich, daß man im erfindungsgemäßen Trocknungsverfahren wäßrige Zubereitungen wasserlöslicher und/oder unlöslicher organischer und/oder anorganischer Wertstoffe aus Netz-, Wasch- und/oder Reinigungsmitteln der Trocknung unterwirft, die beispielsweise den nachfolgenden Stoffklassen zuzuordnen sind: Komponenten mit Tensid- bzw. Emulgatorwirkung, anorganische und/oder organische Gerüstsubstanzen oder Builder-Komponenten, Waschalkalien, Stellmittel bzw. Neutralsalze, Textilweichmacher, Bleichaktivatoren, Hilfsstoffe zur Verbesserung des Schmutztragevermögens der Flotten wie Vergrauungsinhibitoren oder auch Abrasivstoffe.

In einer wichtigen Ausführungsform wird das erfindungsgemäße Verfahren zur Trocknung von Wertstoffmischungen für den Aufbau von Textilwaschmitteln eingesetzt. Die zu trocknenden wäßrigen Einsatzmaterialien enthalten dabei waschaktive Tenside zusammen mit Gerüst- bzw. Builder-Substanzen, sowie gewünschtenfalls Waschalkalien und/ oder Neutralsalze. Dabei ist hier wenigstens ein Teil der eingesetzten Mehrstoffmischungen zur Bindung und/oder Fixierung von Restwasser, insbesondere in Form von Kristallwasser befähigt. Ebenso wie im Sprühtrocknungsverfahren von Textilwaschmitteln wird bei solchen Stoffmischungen in aller Regel nicht das Textilwaschmittel in seiner Gesamtheit der Wirbelschicht-Sprühgranulation ausgesetzt. Die extreme Temperaturempfindlichkeit peroxidenthaltender Bleichkomponenten, wie Perborat-Monohydrat beziehungsweise -Tetrahydrat und entsprechender anderer besonders temperatursensitiver Komponenten läßt das nicht zu. Als weitere Beispiele seien Enzyme, Duftstoffe, Bleichaktivatoren und andere Kleinkomponenten genannt. Auch die Lehre der Erfindung sieht dementsprechend unter anderem die Herstellung sogenannter Mehrkomponenten-Turmpulver vor, die einen Großteil der das Fertigwaschmittel ausmachenden Komponenten in Mischung vereinigt enthalten, nachträglich aber noch mit flüssigen und/oder festen weiteren Wirkstoffkomponenten beaufschlagt bzw. vermischt werden. Bekannte Beispiele für solche Flüssigkomponenten sind insbesondere leichtflüchtige niotensidische Komponenten, die im erfindungsgemäßen Verfahren zwar nicht mehr über das Abgas in die Umwelt entlassen werden, deren Zugabe zum Gesamtwaschmittel gleichwohl durch nachträgliches Aufdüsen auf ein erfindungsgemäß vorbereitetes saugfähiges Granulat einfach ausgestaltet werden kann.

Im folgenden finden sich allgemeine Angaben von Wertstoffen für die unmittelbare oder mittelbare Verwendung bei der Herstellung von Netz-, Wasch- und /oder Reinigungsmitteln unter Einsatz der erfindungsgemäßen Arbeitsprinzipien, wobei diese Zusammenstellung an heute üblichen Komponenten von Textilwaschmitteln dargestellt ist.

Als anionische Tenside sind zum Beispiel Seifen aus natürlichen oder synthetischen, vorzugsweise gesättigten Fettsäuren brauchbar. Geeignet sind insbesondere aus natürlichen Fettsäuren, zum Beispiel Kokos-, Palmkern- oder Talgfettsäuren, abgeleitete Seifengemische. Bevorzugt sind solche die zu 50 bis 100 % aus gesättigten C₁₂₋₁₈-Fettsäureseifen und zu 0 bis 50 % aus Ölsäureseife zusammengesetzt sind.

Weiterhin geeignete synthetische anionische Tenside sind solche vom Typ der Sulfonate und Sulfate. Besondere Bedeutung kann dabei das erfindungsgemäße Verfahren für entsprechende Verbindungen pflanzlichen und/oder tierischen Ursprungs haben.

Als Tenside vom Sulfonattyp kommen Alkylbenzolsulfonate (C₉₋₁₅-Alkyl), Olefinsulfonate, d. h. Gemische aus Alken- und Hydroxyalkansulfonaten sowie Sulfonate in Betracht, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält. Geeignet sind auch die Alkansulfonate, die aus C₁₂₋₁₈-Alkanen durch Sulfochlorierung oder Sulfoxidation und anschließende Hydrolyse beziehungsweise Neutralisation beziehungsweise durch Bisulfitaddition an Olefine erhältlich sind, sowie insbesondere die Ester von Alpha-Sulfofettsäuren (Estersulfonate), z. B. die Alpha-sulfonierten Methylester der hydrierten Kokos-, Palmkern- oder Talgfettsäuren.

Wichtige Tensid- beziehungsweise Emulgatorkomponenten sind in diesem Zusammenhang auch die sogenannten Di-salze, die sich durch Verseifung der zuvor genannten Alpha-sulfonierten Fettsäure-Methylester beziehungsweise durch unmittelbare Sulfonierung von insbesondere gesättigten Fettsäuren - insbesondere C₁₂₋₁₈-Fettsäuren - herstellen lassen.

Geeignete Tenside vom Sulfattyp sind die Schwefelsäuremonoester aus primären Alkoholen natürlichen und synthetischen Ursprungs, d. h. aus Fettalkoholen, z. B. Kokosfettalkoholen, Talgfettalkoholen, Oleylalkohol, Lauryl-, Myristyl-, Palmityl- oder Stearylalkohol, oder den C₁₀₋₂₀-Oxoalkoholen, und diejenigen sekundärer Alkohole dieser Kettenlänge. Auch die Schwefelsäuremonoester der mit insbesondere 1 bis 6 Mol Ethylenoxid ethoxylierten Alkohole natürlichen und/oder synthetischen Ursprungs sind geignete Komponenten. Als Beispiel für Synthese-Alkohole seien Verbindungen wie 2-Methyl-verzweigte C₉₋₁₁-Alkohole mit im Durchschnitt 3,5 Mol Ethylenoxid genannt. Ferner eignen sich sulfatierte Fettsäuremonoglyceride.

Die anionischen Tenside können in Form ihrer Natrium-, Kalium- und Ammoniumsalze sowie als lösliche Salze organischer Basen vorliegen.

Als nichtionische Tenside sind Anlagerungsprodukte von 1 bis 40, vorzugsweise 2 bis 20 Mol Ethylenoxid an 1 Mol einer aliphatischen Verbindung mit im wesentlichen 10 bis 20 Kohlenstoffatomen aus der Gruppe der Alkohole, Carbonsäuren, Fettamine, Carbonsäureamide oder Alkansulfonamide verwendbar. Besonders wichtig sind die Anlagerungsprodukte von 8 bis 20 Mol Ethylenoxid an primäre Alkohole, wie z. B. an Kokos- oder Talgfettalkohole, an Oleylalkohol, an Oxoalkohole oder an sekundäre Alkohole mit 8 bis 18, vorzugsweise 12 bis 18 C-Atomen. Neben den wasserlöslichen Nonionics sind aber auch nicht beziehungsweise nicht vollständig wasserlösliche Polyglykolether mit 2 bis 7 Ethylenglykolether-Resten im Molekül von Interesse, insbesondere wenn sie zusammen mit wasserlöslichen, nichtionischen oder anionischen Tensiden eingesetzt werden. Im erfindungsgemäßen Verfahren kann der Verschleppungstendenz solcher nichtionischen Tenside dadurch Rechnung getragen werden, daß Komponenten dieser Art ganz oder teilweise nach Abschluß der Wirbelschicht-Sprühgranulation auf das erhaltene Granulat aufgetragen werden. Insbesondere kann das auch Gültigkeit für bei Raumtemperatur flüssige Niotenside haben.

Außerdem können als nichtionische Tenside auch Alkyglykoside der allgemeinen Formel R-O-(G)ₓ eingesetzt werden, in der R einen primären geradkettigen oder verzweigten aliphatischen Rest mit 8 bis 22, vorzugsweise 12 bis 18 C-Atomen bedeutet, G ein Symbol ist, das für eine Glykose-Einheit mit 5 oder 6 C-Atomen steht, und der Oligomerisierungsgrad x zwischen 1 und 10 liegt.

Als organische und anorganische Gerüst- beziehungsweise Builder-Substanzen eignen sich schwach sauer, neutral oder alkalisch reagierende lösliche und/oder unlösliche Komponenten, die Calciumionen auszufällen oder komplex zu binden vermögen. Geeignete und insbesondere ökologisch unbedenkliche Builder-Substanzen sind feinkristalline synthetische Zeolithe der bereits geschilderten Art. Als weitere Builder-Bestandteile, die insbesondere zusammen mit den Zeolithen eingesetzt werden können, kommen (co-)polymere Polycarboxylate in Betracht, wie Polyacrylate, Polymethacrylate und insbesondere Copolymere der Acrylsäure mit Maleinsäure, vorzugsweise solche mit 50 % bis 10 % Maleinsäure. Das Molekulargewicht der Homopolymeren liegt im allgemeinen zwischen 1 000 und 100 000, das der Copolymeren zwischen 2 000 und 200 000, vorzugsweise 50 000 bis 120 000, bezogen auf freie Säure. Ein besonders bevorzugtes Acrylsäure-Maleinsäure-Copolymer weist ein Molekulargewicht von 50 000 bis 100 000 auf. Geeignete, wenn auch weniger bevorzugte Verbindungen dieser Klasse sind Copolymere der Acrylsäure oder Methacrylsäure mit Vinylethern, wie Vinylmethylether, in denen der Anteil der Säure mindestens 50 % beträgt. Brauchbar sind ferner Polyacetalcarbonsäuren, wie sie beispielsweise in den US-Patentschriften 4,144,226 und 4,146,495 beschrieben sind, sowie polymere Säuren, die durch Polymerisation von Acrolein und anschließende Disproportionierung mittels Alkalien erhalten werden und aus Acrylsäureeinheiten und Vinylalkoholeinheiten beziehungsweise Acroleineinheiten aufgebaut sind.

Brauchbare organische Gerüstsubstanzen sind beispielsweise die bevorzugt in Form ihrer Natriumsalze eingesetzten Polycarbonsäuren, wie Citronensäure und Nitrilotriacetat (NTA), sofern ein derartiger Einsatz aus ökologischen Gründen nicht zu beanstanden ist.

In Fällen, in denen ein Phosphat-Gehalt toleriert wird, können auch Phosphate mitverwendet werden, insbesondere Pentanatriumtriphosphat, gegebenenfalls auch Pyrophosphate sowie Orthophosphate, die in erster Linie als Fällungsmittel für Kalksalze wirken.

Geeignete anorganische, nicht komplexbildende Salze sind die - auch als "Waschalkalien" bezeichneten - Bicarbonate, Carbonate, Borate oder Silikate der Alkalien; von den Alkalisilikaten sind vor allem die Natriumsilikate mit einem Verhältnis Na₂O : SiO₂ wie 1 : 1 bis 1 : 3,5 brauchbar. Aus den restlichen Gruppen üblicher Waschmittelbestandteile kommen zur Mitverwendung im erfindungsgemäßen Verfahren insbesondere Komponenten aus den Klassen der Vergrauungsinhibitoren (Schmutzträger), der Neutralsalze und der textilweichmachenden Hilfsmittel in Betracht.

Geeignete Vergrauungsinhibitoren sind beispielsweise Carboxymethylcellulose, Methylcellulose, Methylhydroxyethylcellulose und deren Gemische. Als typisches Beispiel für einen geeigneten Vertreter der Neutralsalze ist das bereits erwähnte Natriumsulfat zu nennen. Geeignete Weichmacher sind beispielsweise quellfähige Schichtsilikate von der Art entsprechender Montmorilonite, beispielsweise Bentonit.

Hochtemperatur-sensitive übliche Mischungsbestandteile von Wasch- und Reinigungsmitteln, wie Bleichmittel auf Basis von Per-Verbindungen, Enzyme aus der Klasse Proteasen, Lipasen und Amylasen bzw. Bakterienstämme oder Pilze, Stabilisatoren, Parfüme, temperaturempfindliche Farbstoffe und dergleichen, werden wie bereits angegeben zweckmäßigerweise mit dem zuvor gewonnenen Granulat vermischt.

Im folgenden werden Beispiele und Versuchsergebnisse des erfindungsgemäßen Verfahrens näher beschrieben.

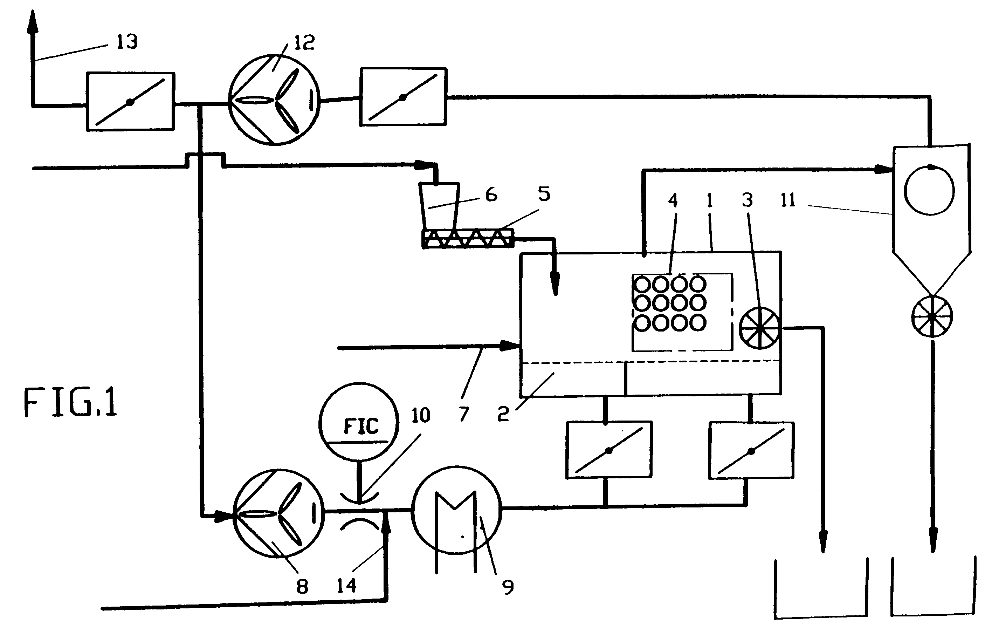

Figur 1 zeigt schematisch die Versuchsanlage. Sie bestand im wesentlichen aus einer Wirbelkammer 1 mit einem zweigeteilten, getrennt anströmbaren Schlitzboden 2, einer Zellenradschleuse 3 zum Produktaustrag und einem in der Wirbelkammer 1 integrierten Rohrbündelwärmeaustauscher 4, der oberhalb des Schlitzbodens 2 eingebaut war. Zur Rückführung des aufgemahlenen Überkorns diente eine Förderschnecke 5 mit Aufgabetrichter 6. Das Trocknungsgut, der Slurry, wurde aus einer beheizten Vorlage über die Leitung 7 zu einer Einstoffdüse gepumpt und in das Wirbelbett gesprüht.

Eine Gebläse 8 förderte Wasserdampf durch einen zum Wiederaufheizen (Überhitzen) vorgesehen Wärmeaustauscher 9 in die Wirbelkammer 1. Zwischen das Gebläse 8 und den Wärmeaustauscher 9 war eine Durchflußmeß- und Regeleinrichtung 10 geschaltet. Der austretende Dampf wurde in einem Zyklon 11 von Staub gereinigt und über einen weiteren Ventilator 12 zurückgeführt. Die Überschußbrüden wurden bei 13 ausgeschleust. Zum Anfahren des Versuchs war ein Anschluß 14 an die Kreislaufleitung für Dampf vorgesehen.

Zu Versuchsbeginn wurde sogenanntes "Turmpulver" als Bettmaterial vorgelegt. Dieses war mit herkömmlicher Trocknung mit heißer Luft in einem Produktionssprühturm hergestellt worden (Schüttgewicht 550 g/l, Restfeuchte ca. 12 %). Das Turmpulver enthielt etwa 16 Gew.-% Tenside, ca. 15 Gew.-% Soda sowie 28 % Zeolith NaA, etwa 2 % Wasserglas, Sokalan (R) sowie übliche Kleinkomponenten.

Nach Fluidisierung des Wirbelgutes mit heißer Luft wurde mit der Einstoffdüse (Bohrung 0,7 mm) der Waschmittelslurry eingesprüht (ca. 30 kg/h bei 6 bar Sprühdruck). Sein Feststoffanteil enthielt die oben angegebenen Komponenten.

Die Ausgangsfeuchte des Slurrys betrug 50 %. Die feuchte Abluft wurde teilweise ausgeschleust, zum größten Teil jedoch im Kreislauf gefahren, wobei der im Kreislauf geführte Luftstrom im Wärmeaustauscher 9 vor der Wirbelschicht wieder aufgeheizt wurde. Der ausgeschleuste Luftstrom wurde durch Frischluft wieder ersetzt. Die Temperatur der Luft betrug am Eintritt in die Wirbelschicht etwa 145°C, am Austritt etwa 90°C.

Ein Teil des erzeugten Granulates wurde über die Zellenradschleuse 3 aus dem Wirbelbett ausgetragen, aufgemahlen und über die Förderschnecke 5 als Granulationskeime der Wirbelschicht wieder zugeführt. Die Verweilzeit des Produktes in der Wirbelschicht war etwa 20 min.

Nachdem über mehrere Stunden keine Zunahme des Schüttgewichtes mehr festgestellt wurde, wurde auf Trocknung mit überhitztem Dampf umgestellt. Der Dampf wurde, wie vorher die Luft, im Kreislauf gefahren. Die Überhitzung des Dampfes erfolgte wieder durch den Wärmeaustauscher 9 vor der Wirbelschicht und den darin angeordneten Rohrbündelwärmeaustauscher 4. Die Dampfeintrittstemperatur betrug im Mittel 150°C, die Dampftemperatur am Austritt der Wirbelschicht 105°C. Der Slurrydurchsatz war 30 kg/h. Als Bettvorlage wurde zu Beginn der Dampftrocknung das in den Vorversuchen mit Lufttrocknung produzierte Granulat verwendet. Die Verweilzeit des Produktes in der Wirbelschicht betrug etwa 20 min.

Die Versuchsergebnisse sind in den Tabellen 1 und 2 dargestellt.

Tabelle 1 zeigt die Schüttgewichte von drei aus dem Wirbelbett entnommenen Proben:
Probe 3 am Ende der Versuche mit Lufttrocknung
Probe 6 nach Trocknung mit Dampf und einfachem Bettaustausch
Probe 7 nach Trocknung mit Dampf und zweifachem Bettaustausch

**Tabelle 1**

| Probe | 3 | 6 | 7 |
|---|---|---|---|
| Kreislaufgas | Luft | Dampf | Dampf |
| Gaseintrittstemperatur (°C) | 140 | 150 | 152 |
| Gasaustrittstemperatur (°C) | 100 | 108 | 108 |
| Gasdurchsatz (Betriebs- m³/h) | 635 | 940 | 945 |
| Produktdurchsatz (kg/h) | 30 | 30 | 30 |
| TS ein (Gew.-%) | 50 | 50 | 50 |
| TS aus (Gew.-%) | 94,3 | 94,9 | 94,3 |
| Schüttdichte (g/l) | 687 | 780 | 820 |
| TS = Trockensubstanzgehalt | | | |

Zu beobachten ist eine deutliche Zunahme des Schüttgewichtes von 687 g/l der Probe 3 über 782 g/l der Probe 6 auf 820 g/l der Probe 7. Die Restfeuchte betrug in allen Fällen ca. 5 % (gemessen mit Infrarottrocknung bei 135°C und 7 min).

Die durchgeführten Siebanalysen (Tabelle 2) zeigen eine Verschiebung zu größeren Teilchen bei der Trocknung mit Dampf.

Aufnahmen mit einem Lichtmikroskop zeigen bei den luftgetrockneten Partikeln eine wesentlich glattere und gleichmäßigere Oberfläche gegenüber den dampfgetrockneten. Aufnahmen des Korninneren zeigen gleichzeitig weniger und kleinere Poren bei dem luftgetrockneten Granulat als bei dem dampfgetrockneten. Eine erheblich bessere Löslichkeit der dampfgetrockneten Partikel ist die Folge.

Anbackungen am Wärmeaustauscher 4 in der Wirbelschicht sowie Produktschäden durch direkten Kontakt mit den Wärmeaustauscherrohren wurden nicht beobachtet.

**Tabelle 2**

| Siebanalyse | | | |
|---|---|---|---|
| Probe | 3 | 6 | 7 |
| größer als 1,6 mm | 9,8 | 46,5 | 31,4 |
| größer als 0,8 mm | 46,9 | 43,3 | 56,7 |
| größer als 0,4 mm | 27,6 | 8,3 | 10,9 |
| größer als 0,2 mm | 8,9 | 1,3 | 0,8 |
| größer als 0,1 mm | 3,4 | 0,5 | 0,3 |
| kleiner/gleich 0,1 mm | 3,5 | 0,2 | 0,2 |

### Bezugszeichenliste

- 1: Wirbelkammer
- 2: Schlitzboden (Anströmboden)
- 3: Zellenradschleuse
- 4: Wärmeaustauscher
- 5: Förderschnecke
- 6: Aufgabetrichter
- 7: Leitung
- 8: Gebläse
- 9: Wärmeaustauscher
- 10: Durchfluß-Meß- und Regeleinrichtung
- 11: Zyklon
- 12: Ventilator
- 13: Überschußbrüden
- 14: Anschluß

## Patentansprüche

1. Verfahren zur insbesondere kontinuierlichen Herstellung von schütt- und rieselfähigen Granulaten von Wertstoffen oder Wertstoffgemischen, die als Netz-, Wasch- und/oder Reinigungsmittel und/oder zur Verwendung in solchen Mitteln geeignet sind, aus ihren wäßrigen Lösungen und/oder Suspensionen durch Wirbelschicht-Sprühgranulation in einem heißen Fluidisierungsgas im Bereich des Normaldrucks,
**dadurch gekennzeichnet**,
daß man mit überhitztem Wasserdampf als Fluidisierungsgas arbeitet, dabei das Granulat vor dessen Gefährdung durch thermische Einwirkung aus dem Granulator austrägt und die lagerbeständige Schütt- und Rieselfähigkeit des derart partiell aufgetrockneten Gutes gegebenenfalls durch Zusatz zur Bindung begrenzter Wassermengen befähigter Mischungsbestandteile und/oder eine Nachbehandlung sicherstellt und daß man im geschlossenen System mit einem Wasserdampfkreislaufstrom arbeitet, dem man den verdampften Wasseranteil des Einsatzgutes als Teilstrom entzieht und die abgegebene Wärmeenergie wieder zuführt.

2. Verfahren nach Anspruch 1,
**dadurch gekennzeichnet**,
daß man dem Heißdampf sowohl über im Wirbelbett integrierte als auch über externe Wärmeaustauscher Wärmeenergie zuführt.

3. Verfahren nach Anspruch 1,
**dadurch gekennzeichnet**,
daß man bei der Trocknung thermisch besonders empfindlicher Wertstoffe oder Gemische daraus dem Heißdampf ausschließlich über externe Wärmeaustauscher Wärmeenergie zuführt, wobei man kürzere Verweilzeiten als bei im Wirbelbett integrierten Wärmeaustauschern einstellt.

4. Verfahren nach einem der Ansprüche 1 bis 3,
**dadurch gekennzeichnet**,
daß man den dem Wasserdampfkreislaufstrom entzogenen Teilstrom von mitgetragenen Anteilen des Einsatzguts reinigt und als Brauchdampf anderweitig verwendet.

5. Verfahren nach einem der Ansprüche 1 bis 4,
**dadurch gekennzeichnet**,
daß man mindestens einen Anteil des dem Wasserdampfkreislaufstrom entzogenen Teilstroms kondensiert und zusammen mit den darin enthaltenen Wertstoffen, gegebenenfalls nach vorheriger Aufkonzentrierung, zur Zubereitung der zu trocknenden wäßrigen Lösungen und/oder Suspensionen einsetzt.

6. Verfahren nach einem der Ansprüche 1 bis 5,
**dadurch gekennzeichnet**,
daß man mit Innendrücken des dampferfüllten Systems im Bereich des Normaldrucks, aber dabei mit derart angehobenen Drücken arbeitet, so daß Lufteinbrüche, beispielsweise an Schadstellen, in das System verhindert werden, wobei System-Innendrücke unterhalb etwa 50 mbar Überdruck bevorzugt sind.

7. Verfahren nach einem der Ansprüche 1 bis 6,
**dadurch gekennzeichnet**,
daß man zur zumindest teilweisen Bindung des im nicht vollständig getrockneten Produkt enthaltenen Restwassers Hilfsstoffe einsetzt, so daß die lagerbeständige Schütt- und Rieselfähigkeit des Trockenguts sichergestellt ist, und diese Hilfsstoffe, zumindest anteilsweise, den wäßrigen Lösungen bzw. Suspensionen schon vor der Wirbelschicht-Sprühgranulation zumischt.

8. Verfahren nach Anspruch 7,
**dadurch gekennzeichnet**,
daß man als Hilfsstoffe zur Bindung des Restwassers Komponenten des Netz-, Wasch- bzw. Reinigungsmittels, insbesondere Builder, Waschalkalien und/oder Stellmittel einsetzt.

9. Verfahren nach einem der Ansprüche 1 bis 8,
**dadurch gekennzeichnet**,
daß man die Trocknung mit dem überhitzten Wasserdampf in der Wirbelschicht bei Restwassergehalten im Bereich von etwa 1 bis 20 Gew.-%, insbesondere im Bereich von etwa 5 bis 15 Gew.-% abbricht und dabei vorzugsweise den Gehalt an freiem, nicht als Kristallwasser gebundenen Wasser auf Werte von höchstens etwa 10 Gew.-%, jeweils bezogen auf das Gewicht des aus der Wirbelschicht ausgetragenen Gutes, begrenzt.

10. Verfahren nach einem der Ansprüche 1 bis 9, wobei die Wärme ausschließlich über die Dampfphase eingebracht wird,
**dadurch gekennzeichnet**,
daß man Wasserdampf einer Eintrittstemperatur von etwa 270 bis 350 °C als Fluidisierungsgas für die Wirbelschicht einsetzt.

11. Verfahren nach einem der Ansprüche 1 bis 9, wobei man die Wärme zusätzlich über in das Wirbelbett integrierte Wärmeaustauscher einbringt,
**dadurch gekennzeichnet**,
daß die Eintrittstemperatur des Wasserdampfes bei 150 bis 180°C liegt.

12. Verfahren nach Anspruch 16,
**dadurch gekennzeichnet**,
daß unter wenigstens anteiliger Rückgewinnung der Kondensationswärme des ausgeschleusten Dampfanteiles und dabei bevorzugt mit Rückführung der ausgetragenen Gutanteile in den Primärkreislauf praktisch frei von Abgas und beladenem Abwasser gearbeitet wird.

13. Verfahren nach einem der Ansprüche 1 bis 12,
**dadurch gekennzeichnet**,
daß man den Restfeuchtegehalt des erhaltenen Granulats in einem mindestens einstufigen Nachbehandlungsschritt homogenisiert.

14. Verfahren nach Anspruch 13,
**dadurch gekennzeichnet**,
daß man den Restfeuchtegehalt in einer weiteren Wirbelschicht mit Luft als Fluidisierungsgas homogenisiert.

15. Verfahren nach einem der Ansprüche 1 bis 10,
**dadurch gekennzeichnet**,
daß man das noch Restwasser enthaltende Granulat unter wertstoffschonenden Bedingungen agglomeriert und nachtrocknet bzw. nachbehandelt.

16. Verfahren nach einem Ansprüche 1 bis 11,
**dadurch gekennzeichnet**,
daß man die mit dem Abgas aus dem Wirbelbett entweichenden Feingutanteile abscheidet und als Keime für die Granulatbildung insbesondere intern mit Hilfe eines über dem Wirbelbett angeordneten Staubfilters in das Wirbelbett zurückführt.

17. Verfahren nach Anspruch 16,
**dadurch gekennzeichnet**,
daß man das Abgas mittels im Kopf des Granulators integrierte und oberhalb des Wirbelbetts angeordnete Tuchfilter reinigt.

18. Verfahren nach einem der Ansprüche 1 bis 17,
**dadurch gekennzeichnet**,
daß man das Granulat über einen oder mehrere, insbesondere im Anströmboden der Wirbelschichtapparatur eingesetzte Sichter, insbesondere Gegenstrom-Schwerkraft-Sichter aus der Wirbelschicht austrägt.

19. Verfahren nach einem der Ansprüche 1 bis 18, **dadurch gekennzeichnet**,
daß man wäßrige Zubereitungen solcher Wertstoffe oder Wertstoffkombinationen einsetzt, die durch kurzfristige Einwirkung von Wasser und Wasserdampf im Temperaturbereich von 100 bis 120°C nicht geschädigt werden und diesen Temperaturbereich wenigstens für einen Zeitraum von 5 s bis 5 min. in der eingesetzten Zubereitungsform schadlos überstehen.

20. Verfahren nach einem der Ansprüche 1 bis 19,
**dadurch gekennzeichnet**,
daß man wäßrige Zubereitungen wasserlöslicher und/oder unlöslicher organischer und/oder anorganischer Wertstoffe aus Netz-, Wasch- und/oder Reinigungsmitteln, wie Komponenten mit Tensid- bzw. Emulgator-Wirkung, anorganische und/oder organische Gerüstsubstanzen oder Builderkomponenten, Waschalkalien, Stellmittel bzw. Neutralsalze, Textilweichmacher, Bleichaktivatoren, Hilfsstoffe zur Verbessrung des Schmutztragevermögens wie Vergrauungsinhibitoren und Abrasivstoffe dem Verfahren unterwirft.

21. Verfahren nach einem der Ansprüche 1 bis 20,
**dadurch gekennzeichnet**,
daß als Wertstoffe ausgewählte Einzelkomponenten organischer oder anorganischer Natur aus den Klassen der Tenside bzw. Emulgatoren oder der Gerüstsubstanzen bzw. Builder, insbesondere aus dem Gebiet der Wertstoffe für Textilwaschmittel, als rieselfähiges Trockengut gewonnen werden.

22. Verfahren nach einem der Ansprüche 1 bis 21,
**dadurch gekennzeichnet**,
daß Wertstoffabmischungen für den Aufbau von Textilwaschmitteln aufgetrocknet werden, die Tenside zusammen mit Gerüst- bzw. Buildersubstanzen und gewünschtenfalls Waschalkalien und/oder Neutralsalzen enthalten, wobei wenigstens ein Teil der Mehrstoffmischungen zur Bindung und/oder Fixierung von Restwasser befähigt ist.

23. Verfahren nach einem der Ansprüche 1 bis 22 zur Gewinnung von rieselfähigen Tensid-Feststoffen, insbesonderen Aniontensiden auf Naturstoffbasis, die insbesondere in Abmischung mit löslichen anorganischen Salzen zur Absicherung der Rieselfähigkeit und/oder des Schüttgewichtes vorliegen.

24. Verfahren nach einem der Ansprüche 1 bis 22 zur Herstellung von getrockneten Wertstoffen auf Silikat-Basis, die insbesondere in Textilwaschmitteln Verwendung finden können und dabei entsprechende quellfähige und/oder nichtquellfähige Vertreter wie Schichtsilikate und/oder Zeolith-Verbindungen, insbesondere Zeolith NaA in Waschmittelqualität, umfassen.

25. Verfahren nach einem der Ansprüche 1 bis 22 zur Gewinnung von Textil-Waschmittel-Turmpulvern, denen temperatursensitive und/ oder wasserdampfflüchtige Komponenten zum Aufbau der fertigen Textilwaschmittel zugesetzt werden.

## Claims

1. A process for the production, more particularly the continuous production, of pourable free-flowing granules of valuable materials or mixtures thereof, which are suitable as and/or for use in wetting agents, detergents and/or cleaning products from aqueous solutions and/or suspensions of such materials by fluidized-bed spray granulation in a hot fluidizing gas in the region of normal pressure,
characterized in that superheated steam is used as the fluidizing gas, the granules are discharged from the granulator before they can be damaged by heat and the long-term pourability and flowability of the material thus dried is optionally established by addition of mixture constituents capable of binding limited quantities of water and/or by an aftertreatment and in that the process is carried out in a closed-loop system comprising a steam circuit from which the water evaporated from the starting material is removed as a partial stream and the thermal energy released is returned.

2. A process as claimed in claim 1, characterized in that thermal energy is introduced into the superheated steam both through heat exchangers integrated in the fluidized bed and through external heat exchangers.

3. A process as claimed in claim 1, characterized in that, in the drying of useful materials particularly sensitive to heat or mixtures thereof, thermal energy is introduced into the superheated steam solely through external heat exchangers, the residence time in the external heat exchangers being shorter than in the case of heat exchangers integrated into the fluidized bed.

4. A process as claimed in any of claims 1 to 3, characterized in that the steam removed from the steam circuit is freed from particles of the starting material entrained therein and put to other uses as recycle steam.

5. A process as claimed in any of claims 1 to 4, characterized in that at least part of the steam removed from the steam circuit is condensed and is reused together with the useful materials present therein, optionally after preliminary concentration, for preparing the aqueous solutions and/or suspensions to be dried.

6. A process as claimed in any of claims 1 to 5, characterized in that the steam-filled system is operated under internal pressures in the region of normal pressure, but under such high pressures that air is unable to penetrate into the system, for example in damaged areas, internal system pressures below about 50 mbar excess pressure being preferred.

7. A process as claimed in any of claims 1 to 6, characterized in that auxiliaries are used for at least partly binding the residual water present in the incompletely dried product so that the long-term pourability and free flow of the dried material is guaranteed, the auxiliaries in question being at least partly incorporated in the aqueous solutions or suspensions before the fluidized-bed spray granulation process.

8. A process as claimed in claim 7, characterized in that components of the wetting agent, detergent or cleaning product, more particularly builders, washing alkalis and/or fillers, are used as the auxiliaries for binding the residual water.

9. A process as claimed in any of claims 1 to 8, characterized in that the drying with superheated steam in the fluidized bed is terminated at residual water contents in the range from about 1 to 20% by weight and, more particularly, in the range from about 5 to 15% by weight and, at the same time, the content of free water not bound as water of crystallization is limited to values of at most about 10% by weight, based on the weight of the material discharged from the fluidized bed.

10. A process as claimed in any of claims 1 to 9, the heat being introduced solely via the steam phase, characterized in that steam having an entry temperature of about 270 to 350°C is used as the fluidizing gas for the fluidized bed.

11. A process as claimed in any of claims 1 to 9, the heat being additionally introduced through heat exchangers integrated in the fluidized bed, characterized in that the entry temperature of the steam is in the range from 150 to 180°C.

12. A process as claimed in claim 16, characterized in that it is carried out with at least partial recovery of the heat of condensation of the steam removed from the circuit and preferably with recycling of the discharged fractions of material to the primary circuit substantially free from waste gas and polluted wastewater.

13. A process as claimed in any of claims 1 to 12, characterized in that the residual moisture content of the granules obtained is homogenized in an at least one-stage aftertreatment step.

14. A process as claimed in claim 13, characterized in that the residual moisture content is homogenized in another fluidized bed with air as the fluidizing gas.

15. A process as claimed in any of claims 1 to 10, characterized in that the granules still containing residual water are agglomerated and after-dried or aftertreated under conditions which do not affect the useful material.

16. A process as claimed in any of claims 1 to 11, characterized in that the fine particles escaping from the fluidized bed with the waste gas are separated and returned to the fluidized bed as nuclei for granule formation, more particularly internally by means of a dust filter arranged over the fluidized bed.

17. A process as claimed in claim 16, characterized in that the waste gas is cleaned by cloth filters integrated in the head of the granulator and arranged above the fluidized bed.

18. A process as claimed in any of claims 1 to 17, characterized in that the granules are discharged from the fluidized bed through one or more classifiers, more particularly countercurrent gravity classifiers, arranged in particular in the feed plate of the fluidized bed.

19. A process as claimed in any of claims 1 to 18, characterized in that aqueous preparations of useful materials or combinations of useful materials which are not damaged by brief exposure to water and steam at temperatures of 100 to 120°C and which, in the formulation used, withstand temperatures in this range without damage for at least 5 s to 5 minutes are used.

20. A process as claimed in any of claims 1 to 19, characterized in that aqueous preparations of water-soluble and/or insoluble organic and/or inorganic useful materials from wetting agents, detergents and/or cleaning products, such as surfactants and emulsifiers, inorganic and/or organic builders or builder components, washing alkalis, fillers or neutral salts, fabric softeners, bleach activators, auxiliaries for improving soil suspending power, such as redeposition inhibitors and abrasives, are subjected to the process.

21. A process as claimed in any of claims 1 to 20, characterized in that individual components of organic or inorganic character selected as useful materials from the classes of surfactants and emulsifiers or builders, more particularly from the field of useful materials for laundry detergents, are obtained as the free-flowing dry material.

22. A process as claimed in any of claims 1 to 21, characterized in that mixtures of useful materials for the production of laundry detergents containing surfactants together with builders and, optionally, washing alkalis and/or neutral salts are dried, at least part of the multicomponent mixtures being capable of binding and/or fixing residual water.

23. A process as claimed in any of claims 1 to 22 for the production of free-flowing surfactant solids, more particularly anionic surfactants based on natural materials, which are present in particular in admixture with soluble inorganic salts for ensuring free flow and/or pourability.

24. A process as claimed in any of claims 1 to 22 for the production of dried silicate-based useful materials which may be used in particular in laundry detergents and which comprise corresponding swellable and/or non-swellable representatives, such as layer silicates and/or zeolite compounds, more particularly detergent-quality zeolite NaA.

25. A process as claimed in any of claims 1 to 22 for the production of laundry detergent tower powders to which temperature-sensitive and/or steam-volatile components are added for the production of the final laundry detergents.

## Revendications

1. Procédé de fabrication notamment en continu de granulats aptes au vrac et à l'écoulement de matières de valeur ou de mélanges de matières de valeur, qui sont appropriés comme agents mouillants, détergents ou agents de nettoyage et/ou pour l'utilisation dans ces agents, à partir de leurs solutions aqueuses et/ou suspension par granulation par pulvérisation en couche fluidifiée dans un gaz chaud de fluidification, caractérisé en ce qu'on opère avec de la vapeur d'eau surchauffée comme gaz de fluidification, ensuite on extrait du granulateur le granulat avant sa mise en danger par effet thermique et on assure l'aptitude au vrac et à l'écoulement stables au stockage du produit séché partiellement de ce type par addition éventuellement de composants de mélange aptes à la liaison de quantités d'eau limitées et/ou par un traitement ultérieur et en ce qu'on opère en système fermé avec un courant circulant de vapeur d'eau duquel on extrait comme courant partiel la proportion d'eau vaporisée du produit utilisé et on alimente à nouveau l'énergie thermique cédée.

2. Procédé selon la revendication 1, caractérisé en ce qu'on amène à la vapeur surchauffée de l'énergie thermique aussi bien par échangeur thermique intégré dans le lit fluidisé que par un échangeur thermique extérieur.

3. Procédé selon la revendication 1, caractérisé en ce que lors du séchage de matières de valeur ou de mélanges particulièrement sensibles thermiquement on amène de l'énergie thermique à la vapeur surchauffée exclusivement par des échangeurs thermiques extérieurs, tandis qu'on ajuste des temps de séjour plus courts qu'avec des échangeurs thermiques intégrés dans le lit fluidisé.

4. Procédé selon une des revendications 1 à 3, caractérisé en ce qu'on purifie le courant partiel retiré du courant du circuit de vapeur d'eau des proportions entraînées du produit utilisé et qu'on utilise ailleurs la vapeur utilisable.

5. Procédé selon une des revendications 1 à 4, caractérisé en ce qu'on condense au moins une partie du courant partiel retiré du courant du circuit de vapeur d'eau et qu'on la met en oeuvre ensemble avec les matières de valeur contenues en elle, éventuellement après concentration préalable, pour la préparation des solutions aqueuses à sécher et/ou des suspensions.

6. Procédé selon une des revendications 1 à 5, caractérisé en ce qu'on opère avec des pressions internes du système rempli de vapeur au niveau de la pression normale, mais en outre avec des pressions augmentées de manière à empêcher des entrées d'air, par exemple dans des endroits nuisibles du système, les pressions internes du système étant de préférence en dessous environ de 50 mbars de surpression.

7. Procédé selon une des revendications 1 à 6, caractérisé en ce qu'on utilise des adjuvants pour la liaison au moins partielle de l'eau résiduelle contenue dans le produit incomplètement séché, de sorte que l'aptitude au vrac et à l'écoulement stables au stockage du produit sec est assurée, et qu'on ajoute et mélange ces matières auxiliaires au moins partiellement, aux solutions aqueuses ou suspensions déjà avant la granulation par pulvérisation dans la couche fluidifiée.

8. Procédé selon la revendication 7, caractérisé en ce qu'on met en oeuvre comme agents auxiliaires pour la liaison de l'eau résiduelle des composants de l'agent mouillant du détergent ou du nettoyant, en particulier des adjuvants, des alcalis de lavage et/ou des agents de fixation.

9. Procédé selon une des revendications 1 à 8, caractérisé en ce qu'on interrompt le séchage à la vapeur d'eau surchauffée dans la couche fluidifiée à des teneurs d'eau résiduelle dans la zone environ de 1 à 20 % en poids, en particulier dans la zone environ de 5 à 15 % en poids et en outre qu'on limite de préférence la teneur en eau libre, non liée comme eau de cristallisation à des valeurs au maximum environ de 10 % en poids, respectivement par rapport au poids du produit extrait de la couche fluidifiée.

10. Procédé selon une des revendications 1 à 9, dans lequel la chaleur est introduite exclusivement par la phase vapeur, caractérisé en ce qu'on utilise de la vapeur d'eau à une température d'entrée environ de 270 à 350°C comme gaz de fluidification pour la couche fluidifiée.

11. Procédé selon une des revendications 1 à 9, dans lequel la chaleur est introduite en supplément par l'échangeur thermique intégré dans le lit fluidisé, caractérisé en ce que la température d'entrée de la vapeur d'eau se situe de 150 à 180°C.

12. Procédé selon la revendication 16, caractérisé en ce qu'on opère avec une récupération au moins partielle de la chaleur de condensation de la proportion de vapeur éclusée et en outre de préférence avec recyclage des parties de produit extraites dans le circuit primaire pratiquement sans gaz d'échappement ni eaux usées chargées.

13. Procédé selon une des revendications 1 à 12, caractérisé en ce qu'on homogénéise la teneur résiduelle d'humidité du granulat obtenu dans une phase de traitement ultérieur au moins en une étape.

14. Procédé selon la revendication 13, caractérisé en ce qu'on homogénéise la teneur résiduelle d'humidité dans une autre couche fluidifiée avec de l'air comme gaz de fluidification.

15. Procédé selon une des revendications 1 à 10, caractérisé en ce qu'on agglomère et sèche ultérieurement ou traite ultérieurement le granulat contenant encore de l'eau résiduelle dans des conditions protégeant la matière de valeur.

16. Procédé selon une des revendications 1 à 11, caractérisé en ce qu'on sépare les parties de produit fin s'échappant avec le gaz d'échappement du lit fluidisé et qu'on les ramène comme germes pour la formation de granulat dans le lit fluidisé intérieurement à l'aide d'un filtre à poussière placé au-dessus du lit fluidisé.

17. Procédé selon la revendication 16, caractérisé en ce qu'on purifie le gaz d'échappement au moyen d'un filtre en toile intégré en tête du granulateur et placé au-dessus du lit fluidisé.

18. Procédé selon une des revendications 1 à 17, caractérisé en ce qu'on extrait de la couche fluidifiée le granulat par un ou plusieurs séparateurs à air implantés, en particulier dans le fond de soufflage de l'appareil à couche fluidifiée, en particulier un classificateur à contre-courant par gravité.

19. Procédé selon une des revendications 1 à 18, caractérisé en ce qu'on met en oeuvre des préparations aqueuses de ces matières de valeur ou combinaison de matières de valeur, qui ne sont pas endommagées, par une influence à court terme d'eau et de vapeur d'eau dans le domaine de température de 100 à 120°C et survivent sans dommage à ce domaine de température au moins pour une période de 5 secondes à 5 minutes sous la forme de préparation mise en oeuvre.

20. Procédé selon une des revendications 1 à 19, caractérisé en ce qu'on soumet au procédé des préparations aqueuses de matières de valeur solubles et/ou insolubles dans l'eau, organiques et/ou minérales à partir d'agents mouillants, de détergents et/ou de nettoyants, comme des composants à action tensioactive ou émulsionnante, des substances de structure minérales et/ou organiques ou des composants d'adjuvants, des alcalis de lavage, des agents de fixation ou des sels neutres, des assouplissants de textile, des activateurs de blanchiment, des substances auxiliaires pour l'amélioration du pouvoir d'antiredéposition comme inhibiteur de grisaillement et matières abrasives.

21. Procédé selon une des revendications 1 à 20, caractérisé en ce qu'on obtient comme produit sec apte à l'écoulement des composants isolés choisis comme matières de valeur de nature organique ou minérale provenant des classes des tensioactifs ou émulsionnants ou des substances de structures ou des adjuvants, en particulier du domaine des matières de valeur pour des détergents de textile.

22. Procédé selon une des revendications 1 à 21, caractérisé en ce que des mélanges de matière de valeur sont séchés pour la constitution de détergents du textile, qui contiennent des tensioactifs en commun avec des substances de structure ou d'adjuvants et éventuellement des alcalis de lavage et/ou des sels neutres, au moins une partie des mélanges de plusieurs substances étant apte à la liaison et/ou fixation d'eau résiduelle.

23. Procédé selon une des revendications 1 à 22, pour l'obtention de matières solides tensioactives aptes à l'écoulement, en particulier des tensioactifs anioniques à base de substance naturelle, qui sont présents en particulier en mélange avec des sels minéraux solubles pour la protection de l'aptitude à l'écoulement et/ou de la densité apparente.

24. Procédé selon une des revendications 1 à 22, pour la préparation de matières de valeur séchées à base de silicate, qui peuvent trouver utilisation en particulier dans des détergents pour textile et en outre comprenant des représentants correspondants aptes au gonflement et/ou non aptes au gonflement comme des silicates lamellaires et/ou des composés de zéolites, en particulier la zéolite NaA en qualité de détergent.

25. Procédé selon une des revendications 1 à 22, pour l'obtention de poudres de tour de détergents pour textile, auxquelles sont ajoutés des composants sensibles à la température et/ou entraînables à la vapeur d'eau pour la constitution des détergents pour textile courants.
